# FASCICULE DE BREVET EUROPEEN

(11) **EP 2 205 425 B1**
(45) Date de publication et mention de la délivrance du brevet: **31.10.2018**
(21) Numéro de dépôt: 08858673.0
(22) Date de dépôt: 24.09.2008
(51) Int. Cl.: B29C 49/18, B29C 49/16, B29C 49/78, B29C 49/66

(54) **PROCEDE DE FABRICATION DE RECIPIENTS COMPRENANT UNE OPERATION DE DEPRESSURISATION INTERMEDIAIRE**
VERFAHREN ZUR HERSTELLUNG VON BEHÄLTERN MIT EINEM SCHRITT VON ZWISCHENZEITLICHEM DRUCKABBAU
METHOD FOR MAKING CONTAINERS COMPRISING AN INTERMEDIATE DEPRESSURISING OPERATION

(30) Priorité: 24.09.2007 FR 0706670
(43) Date de publication de la demande: 14.07.2010
(73) Titulaire: Sidel Participations, 76930 Octeville Sur Mer (FR)
(72) Inventeur: DERRIEN, Mikaël, F-76930 Octeville sur Mer (FR); PROTAIS, Pierrick, F-76930 Octeville Sur Mer (FR)
(74) Mandataire: Grassin d'Alphonse, Emmanuel Jean Marie
(86) Numéro de dépôt international: PCT/FR2008/001326
(87) Numéro de publication internationale: WO 2009/074738

(56) Documents cités:
- EP-A- 0 406 146
- EP-A- 0 500 166
- DE-A1- 19 934 320
- DE-A1-102004 014 653
- FR-A- 2 827 541
- US-A- 5 035 931
- US-A- 5 730 914

## Description

L'invention a trait à la fabrication des récipients par soufflage ou étirage soufflage, à partir d'ébauches en matière plastique telle que PET.

Pour fabriquer un récipient suivant la technique du soufflage, on commence par chauffer une ébauche (qu'il s'agisse d'une préforme ou d'un récipient intermédiaire ayant subi une première opération de soufflage à partir d'une préforme) à une température supérieure à la température de transition vitreuse de la matière constitutive de l'ébauche.

On introduit ensuite l'ébauche dans un moule, puis on effectue le soufflage de l'ébauche en y injectant un gaz (généralement de l'air) sous haute pression (supérieure à 20 bars, et généralement supérieure à 34 bars). La technique de l'étirage soufflage consiste, outre le soufflage, à étirer l'ébauche au moyen d'une tige coulissante, afin notamment de minimiser le désaxement du récipient et d'uniformiser autant que possible la répartition de la matière.

Pour obtenir des récipients résistant à la chaleur lors d'un remplissage à chaud (ces récipients sont dits HR, acronyme de l'anglais *Heat Resistant*), il peut en outre être prévu de chauffer la paroi du moule, le récipient étant temporairement maintenu, en fin de soufflage, en contact avec la paroi ainsi chauffée, ce qui accroît de manière thermique sa cristallinité.

Une fois le soufflage terminé, le récipient subit une opération de dégazage, consistant à le dépressuriser en le mettant à l'air libre. Afin de mieux refroidir le récipient du côté de sa paroi interne de sorte à le rigidifier plus rapidement, on prévoit généralement, avant l'opération de dégazage, une opération de balayage, consistant à introduire dans le récipient un gaz sous une pression inférieure à la pression de soufflage, tout en mettant le récipient à l'air libre, de sorte à créer un mouvement de circulation du gaz (sous une pression de l'ordre de 15 bars), favorable à une diminution plus rapide de la température.

Cette technique de fabrication éprouvée (illustrée sur le chronogramme de la figure 3 et en pointillés sur les courbes des figures 5 et 7), largement répandue notamment dans le domaine l'embouteillage, est parvenue à maturité. Les inventeurs ont toutefois souhaité la perfectionner.

DE 199 34 320 A1 décrit un procédé de fabrication d'un récipient par soufflage dans un moule à partir d'une ébauche en matière plastique, qui comprend :- une opération d'introduction de l'ébauche dans le moule ;-une opération de soufflage consistant à pressuriser l'ébauche en y introduisant un gaz sous une pression dite de soufflage ;- une opération de balayage, postérieure à l'opération de soufflage, consistant à pressuriser partiellement le récipient en y introduisant un gaz sous une pression dite de balayage, inférieure à la pression de soufflage;ce procédé comprenant en outre une opération de dépressurisation partielle du récipient, postérieure à l'opération de soufflage et initiée antérieurement à l'opération de balayage, la fin de l'opération de soufflage précédant le début de l'opération de dépressurisation. Il
est proposé un procédé de fabrication d'un récipient par soufflage dans un moule à partir d'une ébauche en matière plastique selon la revendication 1.

D'autres objets et avantages de l'invention apparaîtront à la lumière de la description faite ci-après en référence aux dessins annexés dans lesquels :

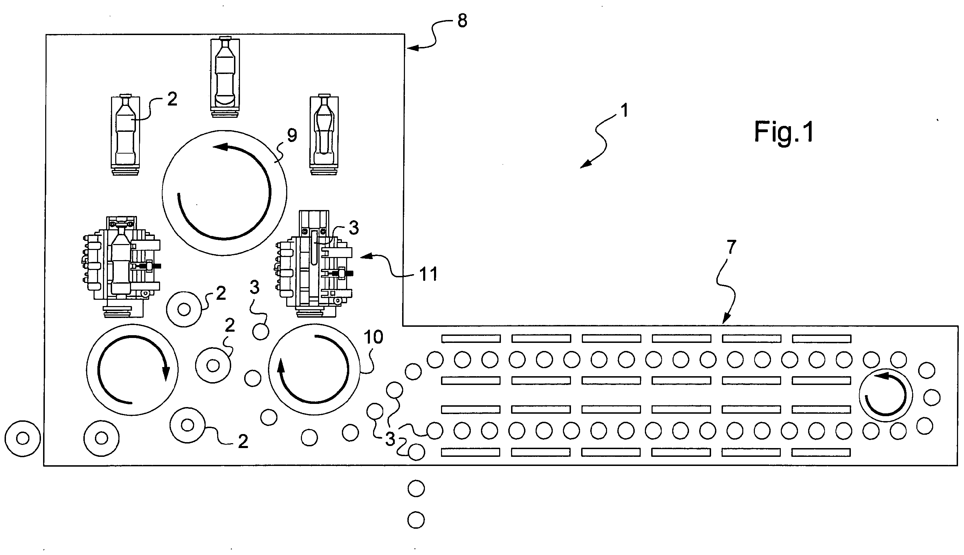

- la figure 1 est une vue schématique montrant une machine de fabrication de récipients ;

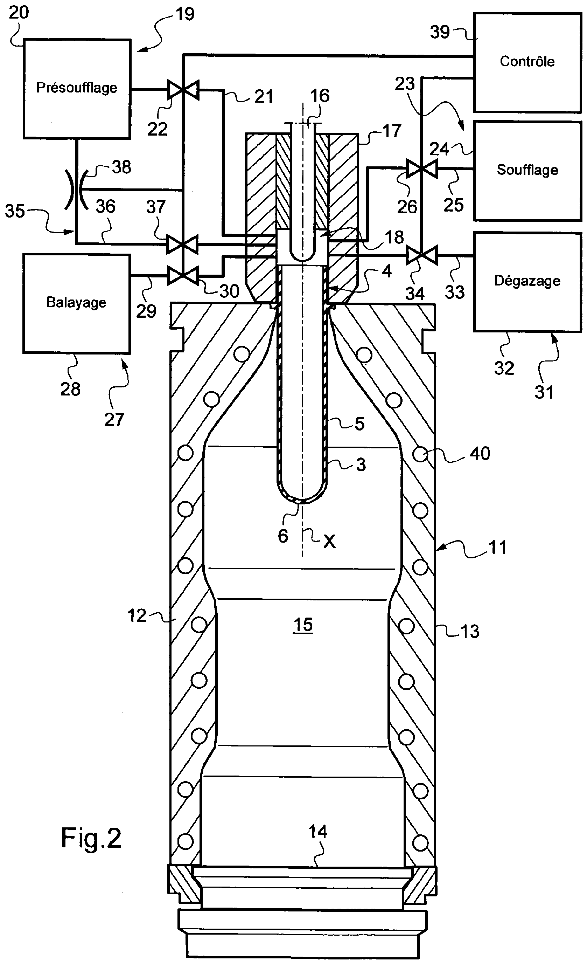

- la figure 2 est une vue schématique en coupe montrant partiellement une unité de moulage au sein de la machine de la figure 1 ;

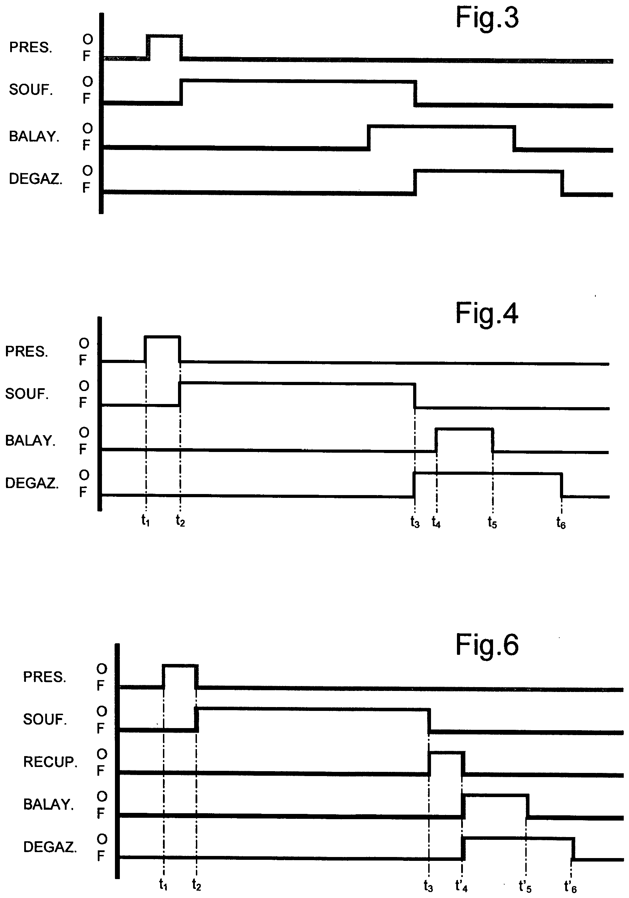

- la figure 3 est un chronogramme illustrant la séquence des opérations effectuées pour la fabrication d'un récipient suivant un procédé classique ;
- la figure 4 est un chronogramme illustrant une séquence d'opérations effectuées pour la fabrication d'un récipient selon un procédé ne correspondant pas à l'invention, suivant un premier mode de réalisation ;

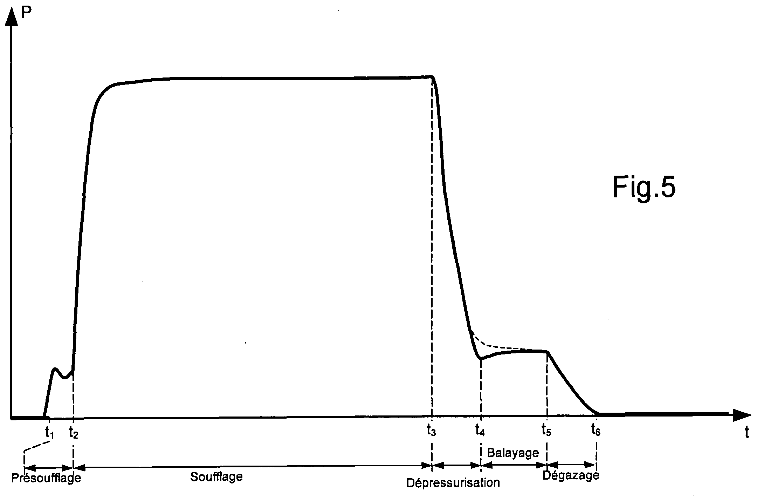

- la figure 5 est un diagramme sur lequel sont tracées deux courbes illustrant les variations de la pression régnant dans une ébauche au cours de la fabrication d'un récipient : en trait continu, selon un procédé ne correspondant pas à l'invention, tel qu'illustré sur la figure 4, et en pointillés selon un procédé classique ;
- la figure 6 est un chronogramme illustrant une séquence d'opérations effectuées pour la fabrication d'un récipient selon un procédé conforme à l'invention, suivant un deuxième mode de réalisation ;

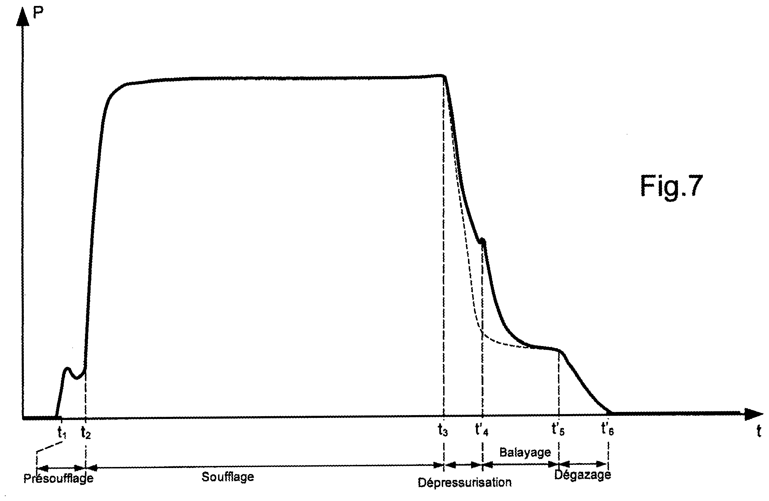

- la figure 7 est un diagramme sur lequel sont tracées deux courbes illustrant les variations de la pression régnant dans une ébauche au cours de la fabrication d'un récipient : en trait continu, selon un procédé conforme à l'invention, tel qu'illustré sur la figure 6, et en pointillés selon un procédé classique.

Sur la figure 1 est représentée une machine **1** pour la fabrication de récipients **2** à partir d'ébauches **3** en matière plastique telle que PET (polyéthylène téréphtalate). Suivant un mode préféré de réalisation, les ébauches **3** sont des préformes, à partir desquelles les récipients **2** finaux sont directement obtenus, sans passage par un récipient intermédiaire. Chaque préforme **3** comprend un col **4** (qui ne subit pas de déformation au cours de la formation du récipient **2**), et un corps **5** cylindrique, terminé par un fond **6** en forme de calotte hémisphérique.

Cette machine **1** comprend un four **7** de type tunnel, dans lequel les préformes **3** sont chauffées au défilé à une température supérieure à la température de transition vitreuse de leur matière constitutive. Dans le cas du PET, dont la température de transition vitreuse est voisine de 70°C, la température de chauffe est de préférence comprise entre 100°C et 140°C.

La machine **1** comprend en outre une pluralité d'unités **8** de moulage, montées sur un carrousel **9** tournant disposé en sortie du four **7** avec interposition d'une roue **10** de transfert, assurant la synchronisation des opérations de chauffe et de moulage des préformes **3.**

Chaque unité **8** de moulage comporte un moule **11,** réalisé en acier ou en alliage d'aluminium, comprenant deux demi-moules **12, 13** et un fond **14** de moule qui définissent ensemble une cavité **15** interne, destinée à recevoir une préforme **3** en provenance du four **7.**

Chaque unité **8** de moulage comprend en outre :
- une tige **16** d'élongation, montée coulissante par rapport au moule **11** le long d'un axe **X** principal (généralement de révolution) de celui-ci, entre une position haute (figure 2) permettant l'introduction de la préforme **3** et une position basse où, à la fin de l'étirage de la préforme **3,** la tige **16** d'élongation atteint le fond **14** de moule en y plaquant le fond **6** de celle-ci,
- un boîtier **17,** définissant une tuyère **18** dans laquelle coulisse la tige **16** d'élongation et qui, lors de la fabrication du récipient **2,** coopère avec le col **4** de la préforme **3.**

L'unité **8** de moulage comprend en outre plusieurs circuits fluidiques débouchant dans la tuyère **18** via le boîtier **17,** à savoir :
- un circuit **19** d'air de présoufflage à moyenne pression (comprise entre 5 et 16 bars), ce circuit **19** comprenant une source **20** d'air de présoufflage et un conduit **21** (qui peut être formé au moins partiellement dans le boîtier **17**) reliant cette source **20** à la tuyère **18** avec interposition d'une première électrovanne **22,** dite électrovanne de présoufflage,
- un circuit **23** d'air de soufflage à haute pression (comprise entre 34 et 39 bars), comprenant une source **24** d'air de soufflage et un conduit **25** (qui peut être formé au moins partiellement dans le boîtier **17**) reliant cette source **24** à la tuyère **18** avec interposition d'une deuxième électrovanne **26,** dite électrovanne de soufflage,
- un circuit **27** de balayage, comprenant une source **28** d'air de balayage à pression moyenne-supérieure (comprise entre 15 bars et 20 bars) et un conduit **29** (qui peut être formé au moins partiellement dans le boîtier **17**) reliant cette source **28** à la tuyère **18** avec interposition d'une troisième électrovanne **30,** dite électrovanne de balayage,
- un circuit **31** de dégazage, comprenant une bouche **32** de mise à l'air libre et un conduit **33** reliant la tuyère **18** à cette bouche **32** avec interposition d'une quatrième électrovanne **34,** dite électrovanne de dégazage ,
- un circuit **35** de récupération d'air, comprenant un conduit **36** reliant la tuyère **18** au circuit d'air **19** de présoufflage (plus précisément à la source **20** d'air de présoufflage) avec interposition d'une cinquième électrovanne **37,** dite électrovanne de récupération, et d'un détendeur **38.** En variante, le circuit **35** de récupération d'air pourrait raccorder la tuyère **18** à un circuit d'air comprimé employé pour d'autres applications, telle que l'alimentation en air comprimé de vérins de commande (notamment les vérins de commande des tiges **16** d'élongation de la machine **1**).

Les électrovannes **22, 26, 30, 34, 37** et le détendeur **38** sont raccordés électriquement à une unité **39** de contrôle qui en commande l'ouverture et la fermeture (en tenant dûment compte de leurs temps de réponse, comme nous le verrons ci-après).

On décrit à présent le procédé de fabrication d'un récipient **2** à partir d'une préforme **3,** en référence aux figures 4 à 7. Sur les figures 4 et 6 sont tracés des chronogrammes illustrant différentes étapes du procédé et qui montrent l'état (O : ouvert ; F : fermé) des électrovannes commandant le présoufflage (PRES.), le soufflage (SOUF.), le balayage (BALAY.), le dégazage (DEGAZ.), ainsi que, sur la figure 6, la récupération (RECUP.).

La préforme **3,** montée sur un convoyeur, est tout d'abord introduite dans le four **7** où elle est chauffée au défilé (généralement col **4** en bas). Au sortir du four **7,** la préforme **3** est saisie par une pince de la roue **10** de transfert et introduite, après avoir été retournée pour être orientée col **4** en haut, dans un moule **11** préalablement ouvert. Dans cette position, la tuyère **18** et la tige **16** d'élongation sont en position haute.

Une fois le moule **11** fermé débute la descente conjointe de la tuyère **18,** qui vient coiffer le moule **11** de manière étanche, et de la tige **16** d'élongation, dans la cavité **15** de moulage, tandis que l'unité **39** de contrôle commande, à un instant t₁, l'ouverture de l'électrovanne **22** de présoufflage, pour mettre en communication l'intérieur de la préforme **3** avec la source **20** d'air de présoufflage et introduire dans la préforme **3** de l'air, à la pression de présoufflage.

Après que la tige **16** d'élongation a atteint le fond **14** du moule **11,** l'unité **39** de contrôle commande, à un instant t₂, la fermeture de l'électrovanne **22** de présoufflage et, simultanément, l'ouverture de l'électrovanne **26** de soufflage (moyennant, éventuellement, un temps d'anticipation du temps de réponse des électrovannes **22** et **26,** de sorte qu'à la fermeture de l'une corresponde effectivement à l'ouverture de l'autre), pour mettre en communication l'intérieur de la préforme **3** avec la source **24** d'air de soufflage et pressuriser la préforme **3** en y introduisant de l'air à la pression de soufflage, supérieure à la pression de présoufflage.

La pression régnant dans la préforme **3** atteint rapidement la pression de soufflage, cependant que la préforme **3** subit une expansion radiale jusqu'à atteindre la paroi du moule **11,** lequel, comme illustré sur la figure 2, est muni d'un circuit **40** de chauffe comprenant des canalisations parcourues d'un fluide (tel que de l'huile ou de l'eau) maintenu à une température élevée (c'est-à-dire supérieure à 90°C environ).

Une fois atteinte la paroi du moule **11,** la pression dans la préforme **3** reste sensiblement constante (égale à la pression de soufflage), l'électrovanne **26** de soufflage restant ouverte pendant quelques dixièmes de secondes, de sorte à maintenir la préforme **3** plaquée contre la paroi du moule **11.** Le récipient **2** ainsi formé subit une chauffe sur sa paroi externe (en contact avec la paroi du moule **11**), qui augmente sa cristallinité et lui confère une meilleure résistance à la rétractation lors d'un remplissage à chaud (ce type de récipient est appelé HR - *heat resistant*).

Suivant un premier mode de réalisation qui ne correspond pas à l'invention, illustré sur les figures 4 et 5, l'unité **39** de contrôle commande alors, à un instant t₃, la fermeture de l'électrovanne **26** de soufflage, tout en commandant l'ouverture de l'électrovanne **34** de dégazage (moyennant, éventuellement, un délai d'anticipation du temps de réponse de celle-ci), pour mettre l'intérieur du récipient **2** en communication avec la bouche **32** de mise à l'air libre.

De la pression de soufflage, la pression régnant dans le récipient **2** retombe alors brusquement jusqu'à atteindre une valeur voisine de la pression de présoufflage (figure 5), et inférieure à la pression de dégazage.

Cette dépressurisation partielle du récipient **2** est accompagnée d'une brusque détente de l'air présent dans celui-ci, et d'une diminution concomitante de la température, ce qui assure un refroidissement rapide du côté de la paroi interne du récipient **2.**

Après une durée prédéterminée, comprise entre 0,01 seconde et 0,30 seconde, et de préférence entre 0,05 seconde et 0,30 seconde, l'unité **39** de contrôle commande, à un instant t₄, l'ouverture de l'électrovanne **30** de balayage (l'électrovanne **34** de dégazage maintenue ouverte), pour insuffler dans le récipient de l'air à la pression de balayage et le faire circuler dans celui-ci, ce qui contribue au refroidissement de la paroi interne du récipient **2** tout en maintenant celui-ci, sous une certaine pression, en contact avec la paroi du moule **11.**

A un instant t₅ prédéterminé, l'unité **39** de contrôle commande la fermeture de l'électrovanne **30** de balayage, l'électrovanne **34** de dégazage étant maintenue ouverte. L'air résiduel est alors entièrement évacué par la bouche **32** de mise à l'air libre.

Dès lors que la pression régnant dans le récipient **2** a atteint la pression atmosphérique, l'unité **39** de contrôle commande enfin la fermeture de l'électrovanne **34** de dégazage.

Les opérations suivantes sont, de manière classique, l'extraction du récipient **2** de son moule **11,** et le chargement de la préforme **3** suivante.

Ainsi, la fabrication du récipient suivant ce premier mode de réalisation peut être résumée par la séquence des opérations successives suivantes :
t₁-t₂ : présoufflage
t₂-t₃ : soufflage
t₃-t₄ : dépressurisation (au moins partielle)
t₄-t₅ : balayage
t₅-t₆ : dégazage

Cette séquence a, nous l'avons vu, l'avantage d'accélérer le refroidissement du côté de la paroi interne du récipient **2** grâce à l'opération de dépressurisation, qui permet une détente rapide de l'air présent dans le récipient **2** à l'issue du soufflage.

Suivant un deuxième mode de réalisation, illustré sur les figures 6 et 7, l'unité de contrôle commande à l'instant t₃ la fermeture de l'électrovanne **26** de soufflage, tout en commandant l'ouverture de l'électrovanne **37** de récupération, (moyennant, éventuellement, un délai d'anticipation du temps de réponse de celle-ci), pour mettre l'intérieur du récipient **2** en communication avec le circuit **19** d'air de présoufflage via le détendeur **38,** et ainsi dépressuriser au moins partiellement la préforme **3.**

De la pression de soufflage, la pression régnant dans le récipient **2** retombe alors brusquement jusqu'à atteindre une valeur palier prédéterminée, jugée suffisante pour permettre la récupération et le recyclage de l'air comprimé.

Après une durée prédéterminée, comprise entre 0,01 seconde et 0,20 seconde, et de préférence entre 0,05 seconde et 0,20 seconde, l'unité **39** de contrôle commande, à un instant t'₄, la fermeture de l'électrovanne **37** de récupération et l'ouverture simultanée de l'électrovanne **30** de balayage et de l'électrovanne **34** de dégazage, pour insuffler dans le récipient **2** de l'air à la pression de balayage et le faire circuler dans celui-ci, de sorte à accélérer le refroidissement de la paroi interne du récipient **2.**

A un instant t'₅, l'unité **39** de contrôle commande la fermeture de l'électrovanne **30** de balayage, l'électrovanne **34** de dégazage étant maintenue ouverte. L'air résiduel est alors entièrement évacué par la bouche **32** de mise à l'air libre.

Dès lors que la pression régnant dans le récipient **2** a atteint la pression atmosphérique, l'unité **39** de contrôle commande enfin, à un instant t'₆, la fermeture de l'électrovanne **34** de dégazage.

Les opérations suivantes sont, de manière classique, l'extraction du récipient **2** de son moule **11,** et le chargement de la préforme **3** suivante.

Ainsi, la fabrication du récipient suivant ce deuxième mode de réalisation peut être résumée par la séquence des opérations successives suivantes :
t₁-t₂ : présoufflage
t₂-t₃ : soufflage
t₃-t'₄ : dépressurisation/récupération
t'₄-t'₅ : balayage
t'₅-t'₆ : dégazage

Cette séquence permet de recycler, notamment en tant qu'air de présoufflage, une partie de l'air issu du soufflage, grâce à l'opération de dépressurisation/récupération par laquelle l'air présent dans le récipient **2** à la fin du soufflage est récupéré, via l'électrovanne **37** de récupération, dans le circuit **19** d'air de présoufflage.

Il en résulte une réduction de la consommation d'air sous pression, une partie de l'air de présoufflage (et éventuellement de l'air comprimé utilisé dans d'autres applications nécessaires au fonctionnement de la machine **1**) provenant du recyclage de l'air sous pression contenu dans le récipient lors de sa fabrication.

## Revendications

1. Procédé de fabrication d'un récipient (**2**) par soufflage dans un moule (**11**) à partir d'une ébauche (**3**) en matière plastique, qui comprend :
- une opération d'introduction de l'ébauche (**3**) dans le moule (**11**) ;
- une opération de soufflage consistant à pressuriser l'ébauche (**3**) en y introduisant un gaz sous une pression dite de soufflage ;
- une opération de balayage, postérieure à l'opération de soufflage, consistant à pressuriser partiellement le récipient (**2**) en y introduisant un gaz sous une pression dite de balayage, inférieure à la pression de soufflage ;
- une opération de dégazage ;
ce procédé comprenant en outre une opération de dépressurisation partielle du récipient, postérieure à l'opération de soufflage et initiée antérieurement à l'opération de balayage, la fin de l'opération de soufflage étant simultanée au début de l'opération de dépressurisation et la fin l'opération de dépressurisation étant simultanée au début de l'opération de balayage, l'opération de dégazage et l'opération de balayage étant lancées simultanément, la dépressurisation étant accompagnée d'une récupération au moins partielle du gaz évacué, l'opération de dégazage étant effectuée par mise en communication de l'intérieur du récipient avec l'air libre.

2. Procédé selon la revendication 1, **caractérisé en ce que** l'opération de dégazage est maintenue postérieurement au balayage.

3. Procédé selon l'une des revendications précédentes, **caractérisé en ce qu'**il comprend une opération de présoufflage, consistant à pressuriser l'ébauche (**3**) en y introduisant un gaz sous une pression de présoufflage inférieure à la pression de soufflage, et **en ce qu'**au moins une partie du gaz récupéré lors de la dépressurisation est récupéré en tant que gaz de présoufflage.

4. Procédé selon l'une des revendications précédentes, dans lequel l'opération de balayage débute entre 0,01 seconde et 0,20 seconde après le début de l'opération de dépressurisation.

5. Procédé selon la revendication 4, dans lequel l'opération de balayage débute entre 0,05 seconde et 0,20 seconde après le début de l'opération de dépressurisation.

6. Procédé selon l'une des revendications précédentes, dans lequel la pression de soufflage est supérieure ou égale à 20 bars.

7. Procédé selon l'une des revendications précédentes, dans lequel la pression de balayage est comprise entre 15 et 20 bars.

8. Procédé selon l'une des revendications précédentes, dans lequel, pour la fabrication de récipients (**2**) résistant à la chaleur, le moule (**11**) est maintenu à une température élevée.

9. Procédé selon la revendication 8, dans lequel le moule (**11**) est maintenu à une température comprise entre 90°C et 160°C.

## Patentansprüche

1. Verfahren zur Fertigung eines Behälters (2) durch Blasformen in einer Form (11) ausgehend von einem Rohling (3) aus Kunststoff, das enthält:
- einen Vorgang des Einführens des Rohlings (3) in die Form (11);
- einen Vorgang des Blasformens, der darin besteht, den Rohling (3) unter Druck zu setzen, indem ein Gas unter einem so genannten Blasformdruck in ihn eingeführt wird;
- einen Vorgang des Spülens, nach dem Blasformvorgang, der darin besteht, den Behälter (2) teilweise unter Druck zu setzen, indem ein Gas unter einem so genannten Spüldruck in ihn eingeführt wird, der niedriger ist als der Druck des Blasformens;
- einen Entgasungsvorgang;
wobei diese Verfahren außerdem einen Vorgang der teilweisen Druckentlastung des Behälters nach dem Blasformvorgang und vor dem Spülvorgang gestartet enthält, wobei das Ende des Blasformvorgangs gleichzeitig mit dem Beginn des Druckentlastungsvorgangs und das Ende des Druckentlastungsvorgangs gleichzeitig mit dem Beginn des Spülvorgangs erfolgt, wobei der Entgasungsvorgang und der Spülvorgang gleichzeitig in Gang gebracht werden, wobei die Druckentlastung von einer mindestens teilweisen Wiedergewinnung des abgeführten Gases begleitet wird, wobei der Entgasungsvorgang durch Verbindung des Inneren des Behälters mit der Außenluft ausgeführt wird.

2. Verfahren nach Anspruch 1, **dadurch gekennzeichnet, dass** der Entgasungsvorgang nach dem Spülen beibehalten wird.

3. Verfahren nach einem der vorhergehenden Ansprüche, **dadurch gekennzeichnet, dass** es einen Vorgang des Vorblasformens enthält, der darin besteht, den Rohling (3) unter Druck zu setzen, indem ein Gas unter einem Vorblasformdruck in ihn eingeführt wird, der niedriger als der Blasformdruck ist, und dass mindestens ein Teil des bei der Druckentlastung wiedergewonnenen Gases als Vorblasformgas wiedergewonnen wird.

4. Verfahren nach einem der vorhergehenden Ansprüche, wobei der Spülvorgang zwischen 0,01 Sekunde und 0,20 Sekunde nach dem Beginn des Druckentlastungsvorgangs beginnt.

5. Verfahren nach Anspruch 4, wobei der Spülvorgang zwischen 0,05 Sekunde und 0,20 Sekunde nach dem Beginn des Druckentlastungsvorgangs beginnt.

6. Verfahren nach einem der vorhergehenden Ansprüche, wobei der Blasformdruck höher als oder gleich 20 Bar ist.

7. Verfahren nach einem der vorhergehenden Ansprüche, wobei der Spüldruck zwischen 15 und 20 Bar liegt.

8. Verfahren nach einem der vorhergehenden Ansprüche, wobei die Form (11) zur Fertigung von wärmebeständigen Behältern (2) auf einer hohen Temperatur gehalten wird.

9. Verfahren nach Anspruch 8, wobei die Form (11) auf einer Temperatur zwischen 90°C und 160°C gehalten wird.

## Claims

1. Method for manufacturing a container (2) by blow-moulding in a mould (11) starting from a plastic parison (3), which comprises:
- an operation of introducing the parison (3) into the mould (11);
- a blow-moulding operation which consists in pressurizing the parison (3) by introducing into it a gas under a pressure referred to as the blow-moulding pressure;
- a purging operation, subsequent to the blow-moulding operation, which consists in partially pressurizing the container (2) by introducing into it a gas under a pressure referred to as the purging pressure, lower than the blow-moulding pressure;
- an outgassing operation;
this method further comprising an operation of partially depressurizing the container, subsequent to the blow-moulding operation and initiated prior to the purging operation, the end of the blow-moulding operation being simultaneous with the start of the depressurizing operation and the end of the depressurization operation being simultaneous with the start of the purging operation, the outgassing operation and the purging operation being started simultaneously, the depressurization being accompanied by an at least partial recovery of the gas discharged, the outgassing operation being performed by placing the inside of the container in communication with the open air.

2. Method according to Claim 1, **characterized in that** the outgassing operation is continued subsequent to the purging.

3. Method according to one of the preceding claims, **characterized in that** it comprises a pre-blowing operation, consisting in pressurizing the parison (3) by introducing into it a gas under a pre-blowing pressure lower than the blow-moulding pressure, and **in that** at least some of the gas recovered during the depressurization is recovered as pre-blowing gas.

4. Method according to one of the preceding claims, in which the purging operation begins between 0.01 second and 0.20 second after the start of the depressurization operation.

5. Method according to Claim 4, in which the purging operation begins between 0.05 second and 0.20 second after the start of the depressurization operation.

6. Method according to one of the preceding claims, in which the blow-moulding pressure is greater than or equal to 20 bar.

7. Method according to one of the preceding claims, in which the purging pressure is comprised between 15 and 20 bar.

8. Method according to one of the preceding claims, in which, in order to manufacture heat resistant containers (2), the mould (11) is kept at a high temperature.

9. Method according to Claim 8, in which the mould (11) is kept at a temperature comprised between 90°C and 160°C.
